# EUROPEAN PATENT SPECIFICATION

(11) **EP 2 096 487 B1**
(45) Date of publication and mention of the grant of the patent: **16.10.2013**
(21) Application number: 07860158.0
(22) Date of filing: 26.12.2007
(51) Int. Cl.: G02F 1/139, G02F 1/13363, G02B 27/10, G02B 27/14, G02F 1/1335

(54) **REFLECTIVE TYPE LIQUID CRYSTAL DISPLAY ELEMENT AND REFLECTIVE TYPE LIQUID CRYSTAL PROJECTOR**
FLÜSSIGKRISTALLANZEIGEELEMENT DES REFLEKTIERENDEN TYPS UND FLÜSSIGKRISTALLPROJEKTOR DES REFLEKTIERENDEN TYPS
ÉLÉMENT D'AFFICHAGE À CRISTAUX LIQUIDES DE TYPE RÉFLÉCHISSANT ET PROJECTEUR À CRISTAUX LIQUIDES DE TYPE RÉFLÉCHISSANT

(30) Priority: 27.12.2006 JP 2006351870
(43) Date of publication of application: 02.09.2009
(73) Proprietor: Fujifilm Corporation, Minato-ku Tokyo 106-8620 (JP)
(72) Inventor: NAKAGAWA, Kenichi, Tokyo 106-8620 (JP); HASHIZUME, Taro, Odawara-shi Kanagawa 250-0001 (JP); TAKAHASHI, Hiroki, Tokyo 106-8620 (JP)
(74) Representative: HOFFMANN EITLE
(86) International application number: PCT/JP2007/074929
(87) International publication number: WO 2008/078766

(56) References cited:
- EP-A1- 0 676 660
- EP-A1- 1 796 400
- EP-A2- 0 793 133
- WO-A1-96/10769
- WO-A1-96/10773
- WO-A1-2004/010712
- WO-A1-2007/004724
- JP-A- 2001 042 314
- JP-A- 2006 078 637
- US-A1- 2005 168 662
- US-A1- 2005 200 779
- MACLEOD H A: "Structure-related optical properties of thin films" JOURNAL OF VACUUM SCIENCE & TECHNOLOGY A (VACUUM, SURFACES, AND FILMS), vol. 4, no. 3, May 1986 (1986-05), pages 418-422, XP002597070 USA ISSN: 0734-2101

## Description

### Technical Field

The present invention relates to a reflective liquid crystal display device and a reflective liquid crystal projector, and more particularly to the reflective liquid crystal display device and the reflective liquid crystal projector having a vertically alignment nematic (VAN) liquid crystals.

### Background Art

A liquid crystal display device (hereinafter, LCD) can be found in a variety of electronic hardware, such as a display of calculators, electronic dictionaries, televisions and digital cameras, a monitor of car navigation system, cellular phones and computers, and a display panel of projectors.

According to the operation modes of a liquid crystal layer, the LCD can be classified into several types, such as TN (Twisted Nematic) LCD, VAN (Vertical Alignment Nematic) LCD, IPS (In-Plane Switching) LCD and OCB (Optically Compensatory Bend) LCD. Based on the purpose of an electronic hardware and the required function, one of these operation modes is selected.

The VAN-LCD, for example, contains nematic liquid crystal molecules between a pair of substrates each of which has a vertical alignment film on the interior surface, and these liquid crystal molecules are aligned substantially vertical to the substrate when no voltage is applied to a liquid crystal layer (hereinafter, voltage-off state). When a pair of polarizing plates is provided in crossed-nicols across the VAN-LCD, and the VAN-LCD is viewed from the front in voltage-off state, black color is displayed with extremely high contrast.

Because of this feature, the liquid crystal projectors that need to display enlarged images with high contrast employ the VAN-LCD. However, while it provides good contrast when viewed from the front, the VAN-LCD, similar to the other operation modes, hardly keeps good display performance when viewed from an oblique angle, and results in lowering the contrast or causing tone reversal to reverse the brightness of neutral colors. These drawbacks are due partly to the obliquely incident light on the liquid crystal layer. This obliquely incident light is then converted by birefringence of the liquid crystal layer into elliptically-polarized light, and passes through an analyzer.

It is therefore proposed to use a retardation compensation element with an optical axis running vertical to the surface, the element referred to as a C-plate, so as to compensate the phase difference of the light passing obliquely through the liquid crystal layer (see, for example, Japanese Patent Laid-open Publication No. 2004-145268).

If the liquid crystal layer is driven as a densely-arranged pixel array using a micro-electrode structure, a lateral electric field generated when a voltage is applied to the pixels next to the voltage-off pixels produces reverse tilt domains where the liquid crystal molecules for the voltage-off pixels are aligned opposite to an intended direction, and causes poor alignment of the liquid crystal molecules. To prevent the poor alignment and stabilize the operation of the LCD, the liquid crystal molecules have to be tilted previously (hereinafter, pre-tilt) at a predetermined angle. Ideally, for the VAN-LCDs, the liquid crystal molecules in the voltage-off state need be pre-tilted at an angle of 3 to 10 degrees from the normal direction to the substrate.

However, in the VAN-LCD thus configured, the birefringence due to the pre-tilt of the liquid crystal molecules leads the light passing vertically through the liquid crystal layer to have a phase difference, and the contrast of the VAN-LCD is lowered.

It is therefore proposed to use a retardation compensation element with an optical axis parallel to the surface, the element referred to as an A-plate, together with the C-plate so as to prevent the contrast degradation due to the pre-tilt (see, for example, Claire Gu & Pochi Yeh "Extended Jones matrix method. II" Journal of Optical Society of America A/vol. 10 No. 5/May 1993 p966-973).

It is also suggested to layer two or more retardation compensation elements whose optical axis runs oblique to the surface, the element referred to as an O-plate, so as to extend the viewing angle of the TN-LCD at any gray levels. More particularly, the contrast of the TN-LCDs is improved by combining the C-plate or the A-plate with a pair of 0-plates arranged with their fast axes perpendicular to each other (see, for example, United State Patent No. 5,638,197).

When used alone, the C-plate is able to compensate the phase difference of the light obliquely incident on the liquid crystal device. However, the C-plate is not able to compensate the phase difference caused by the birefringence due to the pre-tilt of the liquid crystal molecules.

When the C-plate and the A-plate are to be used together, on the other hand, there are not only few choices in material but there is actually no material to provide a high level of durability and mass productivity. For example, while the A-plate is generally composed of a uniaxially-stretched polymer film or a birefringent retardation plate made by a microfabrication technique, the polymer film is not very durable and the birefringent retardation plate is not suitable for mass production.

Still further, when two O-plates are layered with their fast axes orthogonal to each other, this O-plate pair is isotropic to the light moving in a normal line direction to the surface, and hardly compensates the phase difference of the light passing vertically through the VAN-LCD. In other words, these O-plates cannot compensate the phase difference due to the pre-tilt of the liquid crystal molecules.

Specifically, in the United State Patent No. 5,638,197 which simply discloses to use a biaxial 0-plate in the TN-LCDs, there is no teaching of how to install the O-plate, such as the angle of the biaxial O-plate. Accordingly, the disclosure of this patent document may not easily be applied to the VAN-LCDs.

In view of the forgoing, a primary object of the present invention is to provide a reflective VAN-LCD (reflective liquid crystal display device) capable of improving contrast and a viewing angle by compensating phase difference due to pre-tilt of liquid crystal molecules as well as phase difference of obliquely incident light on a liquid crystal layer.

Another object of the present invention is to provide a reflective liquid crystal projector having this VAN-LCD.

### Disclosure of Invention

In order to achieve the above and other objects, a reflective liquid crystal display device having a liquid crystal display cell in which nematic liquid crystal molecules are aligned substantially vertical to a cell substrate (VAN) when no voltage is applied to a liquid crystal layer according to the present invention includes a biaxial birefringent medium made by obliquely depositing an inorganic material. This biaxial birefringent medium has an optical axis inclined to the substrate surface of the VAN liquid crystal cell, and also has a fast axis which coincides with an orthographic projection of a deposition direction of the inorganic material onto the cell surface. The liquid crystal molecules have a tilt direction which is an orthographic projection of the director of said liquid crystal molecules onto the cell surface. The biaxial birefringent medium is oriented such that the fast axis is provided parallel with the tilt direction.

It is also preferred to provide the reflective liquid crystal display device with a uniaxial birefringent medium which has an optical axis perpendicular to the surface of the VAN liquid crystal cell. This uniaxial birefringent medium is combined with the biaxial birefringent medium, and compensates a phase difference of light passing obliquely through the liquid crystal layer and a phase difference of light passing through the biaxial birefringent medium.

The uniaxial birefringent medium is an alternate stack of high refractive index and low refractive index inorganic layers.

A reflective liquid crystal projector according to the present invention projects an image formed in the above reflective liquid crystal display device onto a screen.

According to the present invention, the biaxial birefringent medium compensates the phase difference due to the pre-tilt of the liquid crystal molecules in the VAN-LCD as well as the phase difference of the incident light on the liquid crystal layer. Accordingly, the contrast and the viewing angle are improved in the VAN-LCDs. Additionally, the reflective liquid crystal projector improves contrast when equipped with this reflective liquid crystal display device.

### Brief Description of Drawings

Figure 1 is an external perspective view of a projector with a retardation compensation element according to the present invention;
Figure 2 is a block diagram showing an optical structure of the projector;
Figures 3A to 3C are explanatory views showing an arrangement of a liquid crystal display device and a retardation compensation element;
Figure 4 is a cross-sectional view of a C-plate;
Figure 5 is an explanatory view of an O-plate;
Figure 6 is an explanatory view of an index ellipsoid representing an optical property of the O-plate;
Figure 7 is an explanatory view showing an arrangement of the O-plate to a liquid crystal display device;
Figure 8 is a conoscopic figure showing a viewing angle performance of a projector using only a C-plate as the retardation compensation element; and
Figure 9 is a conoscopic figure showing a viewing angle performance of a projector with the retardation compensation element of the present invention.

### Best Mode for Carrying Out the Invention

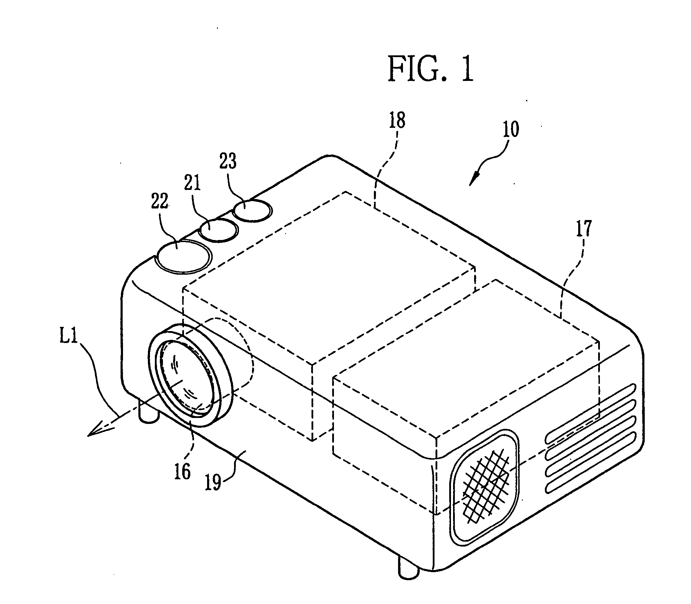

Referring to FIG. 1, a projector 10 according to the present invention includes a projection lens 16, a projector driver 17 and a display optical system 18.

The projector 10 also has a zooming dial 21, a focusing dial 22 and a light amount adjuster dial 23 on a top surface of a housing 19. On a rear surface of the housing 19, one or more connection terminals (not shown) are provided for connection to computers and other external devices.

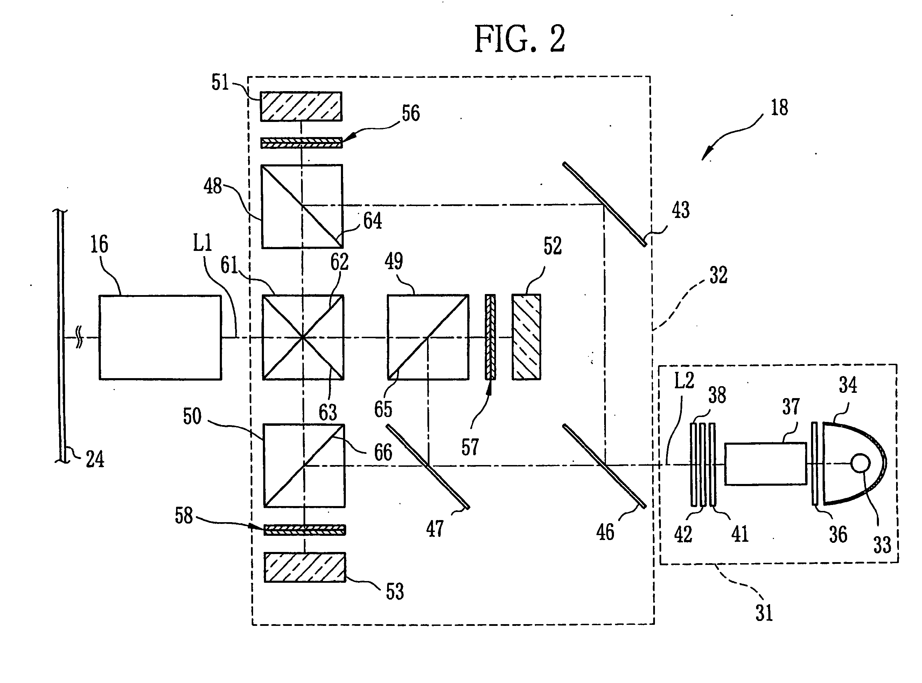

The projection lens 16 enlarges projection light coming from the display optical system 18, and projects it onto a screen 24 (see, FIG. 2). The projection lens 16 is composed of, for example, a zooming lens, a focusing lens and an aperture stop. The zooming lens and the focusing lens are movable along an axis of the projection light (projection light axis) L1. Following the operation of the zooming dial 21, the zooming lens moves to adjust the magnification of a projected image. The focusing lens moves, following the operation of the focusing dial 22 or the movement of the zooming lens, to adjust the focus of a projected image. The aperture stop changes the size of an aperture, in response to the operation of the light amount adjuster dial 23, to adjust the brightness of a projected image.

The projector driver 17 controls each component of the projector 10. For example, the projector driver 17 receives image data from a computer connected to the projector 10, and displays the image on a below mentioned liquid crystal display device.

Additionally, the projector driver 17 includes motors to move the projection lens 16, and separately drives these motors according to the operation on the zooming dial 21, the focusing dial 22 and the light amount adjuster dial 23.

The display optical system 18 divides the light coming from a light source into red, green and blue light, and generates information light of each color by casting the red, green and blue light onto corresponding liquid crystal display devices 51, 52 and 53 (see, FIG. 2) each of which displays an image for red, green or blue color. Then, the display optical system 18 synthesizes the information light into projection light, and projects it onto the screen 24 through the projection lens 16.

As shown in FIG. 2, the display optical system 18 includes a light source 31 and an information-light-generating section 32 to generate information light from the light emitted by the light source 31.

The light source 31 includes a lamp 33, a reflecting mirror 34, an UV-cut filter 36, an integrator 37, a polarizing unit 38, a relay lens 41 and a collimate lens 42.

The lamp 33 is a high-intensity light source, such as a xenon lamp, which radiates natural white light with no specific polarization direction. The white light, radiated from the lamp 33, passes through the UV-cut filter 36 and enters the integrator 37.

The UV-cut filter 36 eliminates an ultraviolet light component from the white light, so that the white light from the lamp 33 does not discolor or deteriorate filters (not shown) made from high molecular weight organic polymer or the like.

The reflecting mirror 34 is, for example, an elliptical mirror, and the lamp 33 is located near a focal point of the elliptical surface. The other focal point of the reflecting mirror 34 lies close to one end of the integrator 37. Owing to this, the white light from the lamp 33 is directed to the integrator 37 efficiently.

Composed of, for example, a glass rod and a micro-lens array attached to the glass rod, the integrator 37 collects the white light out of the lamp 33 and directs it to the collimate lens 42 through the relay lens 41. The amount of light incident on the integrator 37 decreases as the light gets away from an optical axis of the light source (light source optical axis) L2, and is distributed unevenly around the light source optical axis L2. The integrator 37 changes this uneven distribution of light to uniform distribution within a predetermined region around the light source optical axis L2. Accordingly, the brightness of a projected image is substantially uniform across the screen 24.

The collimate lens 42 parallels the light, coming from the integrator 37, to the light source optical axis L2. The polarizing unit 38 transmits the vertically polarized light components to the paper surface of this drawing (hereinafter, S polarized light components), among the light from the collimate lens 42, while converts the horizontally polarized light components to the paper surface of this drawing (hereinafter, P polarized light components) into the S polarized light components. The beam of the S polarized light components is then directed to a dichroic mirror 46 of the information-light-generating section 32.

The information-light-generating section 32 includes dichroic mirrors 46, 47, polarization beam splitters 48, 49, 50, liquid crystal display devices 51, 52, 53 (reflective liquid crystal display devices), retardation compensation elements 56, 57, 58 and a dichroic prism 61.

The dichroic mirror 46 is arranged to form a 45-degree angle between a normal line to the light source optical axis L2. The dichroic mirror 46 transmits only red light in the S polarized white light, coming from the light source 31, to a reflecting mirror 43. The reflecting mirror 43 reflects the red light having passed through the dichroic mirror 46 to the polarization beam splitter 48. Additionally, the dichroic mirror 46 transmits green and blue light in the S polarized white light to the dichroic mirror 47.

The dichroic mirror 47 is arranged to form a 45-degree angle between a normal line to the surface and the optical axis of incident light. The dichroic mirror 47 reflects the green light in the S polarized light, coming from dichroic mirror 46, to the polarization beam splitter 49 while transmits the blue light to polarization beam splitter 50.

The polarization beam splitter 48 is a cubic shape composed of two triangular prisms with their inclined faces attached to each other. Between the two prisms, a polarization split film 64 is disposed. The polarization split film 64 reflects the S polarized light components of the light incident at 45 degrees while transmits P polarized light components.

With this structure, the polarization beam splitter 48 reflects the S polarized red light coming from the dichroic mirror 46 by way of the reflecting mirror 43, and guides the light to the liquid crystal display device 51. The light, now changed into the S polarized red information light, re-enters the polarization beam splitter 48 from the liquid crystal display device 51, and reflects off the polarization split film 64. The P polarized red information light coming from the liquid crystal display device 51, on the other hand, passes through the polarization split film 64 and enters the dichroic prism 61.

The polarization beam splitter 49 has the same structure as the polarization beam splitter 48, and includes a polarization split film 65. The S polarized green light coming from the dichroic mirror 47 is reflected by the polarization split film 65 and guided to the liquid crystal display device 52. The S polarized green information light re-entering from the liquid crystal display device 52 is reflected by the polarization split film 65. The P polarized green information light, on the other hand, passes through the polarization split film 65 and enters the dichroic prism 61.

The polarization beam splitter 50 also has the same structure as the polarization beam splitter 48, and includes a polarization split film 66. The S polarized blue light coming from the dichroic mirror 47 is reflected by the polarization split film 66 and guided to the liquid crystal display device 53. The S polarized blue information light re-entering from the liquid crystal display device 53 is reflected by the polarization split film 66. The P polarized blue information light, on the other hand, passes through the polarization split film 66 and enters the dichroic prism 61.

The liquid crystal display device 51 is a reflective VAN-LCD. Namely, the liquid crystal display device 51 has a liquid crystal layer in which liquid crystal molecules are aligned vertical to the surface in the voltage-off state. In the liquid crystal display device 51, the voltage across the liquid crystal layer is adjusted on a pixel-by-pixel basis to change the orientation of the liquid crystal molecules. Depending on the orientation of the liquid crystal molecules, the function of the P polarization of the light passing through the pixels is controlled, and an image is displayed.

Driven by the projector driver 17, the liquid crystal display device 51 displays a grayscale image of red color components of projection image data retrieved from a computer or such. The red light changes, when reflected off the liquid crystal display device 51, into red information light that carries the information of the red color components of the projection image.

The liquid crystal display device 52 is also a reflective VAN-LCD driven by the projector driver 17, and displays a grayscale image of green color components of the projection image data. The green light changes, when reflected off the liquid crystal display device 52, into green information light that carries the information of the green color components of the projection image.

The liquid crystal display device 53 is also a reflective VAN-LCD driven by the projector driver 17, and displays a grayscale image of blue color components of the projection image data. The blue light changes, when reflected off the liquid crystal display device 53, into blue information light that carries the information of the blue color components of the projection image.

The retardation compensation element 56 compensates the phase difference of the red information light proceeding from the liquid crystal display device 51 to the polarization beam splitter 48. Namely, the retardation compensation element 56 changes the phase of the light that passes obliquely through the liquid crystal display device 51 to the phase not to pass the polarization beam splitter 48, which works as an analyzer. Also, the retardation compensation element 56 compensates the phase difference caused in the light passing vertically through the liquid crystal display device 51 by the birefringence due to the pre-tilt of the liquid crystal molecules.

Similarly, the retardation compensation element 57 compensates the phase difference of the green information light proceeding from the liquid crystal display device 52 to the polarization beam splitter 49, and the retardation compensation element 58 compensates the phase difference of the blue information light proceeding from the liquid crystal display device 53 to the polarization beam splitter 50.

The dichroic prism 61 is a glass element or a transparent element with the shape of a cube, which contains mutually perpendicular dichroic surfaces 62, 63. The dichroic surface 62 reflects the red light while transmits the green light. The dichroic surface 63 reflects the blue light while transmits the green light.

Therefore, the red, green and blue information light, coming from the liquid crystal display devices 51, 52 and 53 respectively, are synthesized by the dichroic prism 61 into a projection light, which is then directed to the projection lens 16 and projected in full color on the screen 24.

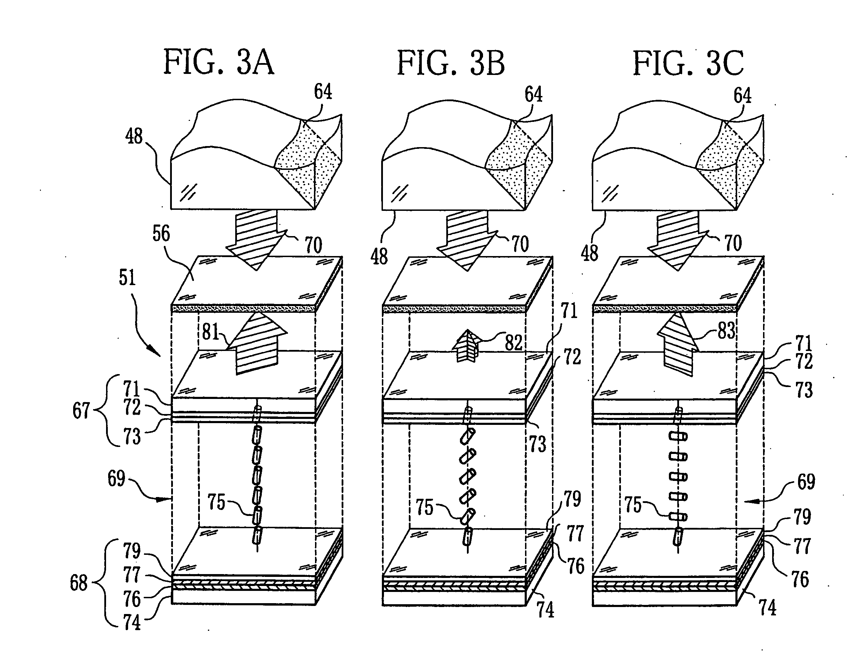

More particularly, as shown in FIG. 3A, the retardation compensation element 56 is located between the liquid crystal display device 51 and the polarization beam splitter 48. The liquid crystal display device includes a transparent substrate 67, a reflecting substrate 68, and a liquid crystal layer 69 between the transparent substrate 67 and the reflecting substrate 68. The liquid crystal display device 51 is a device so-called LCOS (Liquid Crystal On Silicon), the reflective liquid crystal display device having the liquid crystal layer on a semiconductor substrate.

The transparent substrate 67 is composed of, for example, a glass substrate 71, a transparent electrode 72 and an alignment film 73. These components are arranged in the order of the glass substrate 71, the transparent electrode 72 and the alignment film 73 from the light source side. The transparent substrates 67 is all made of a transparent material, and therefore transmits almost all the S polarized red light coming from the polarization beam splitter 48.

The transparent electrode 72 is, for example, an indium-tin oxide (ITO) thin film, and formed on the glass substrate 71 by sputtering, electron beam evaporation, or such common method. The transparent electrode 78 functions as a common electrode for each pixel of the liquid crystal display device 51 when a voltage is applied to it and a reflecting electrode 77 described below.

The alignment film 73 is an oblique deposition film made of such inorganic material as SiO, and has a directionality (hereinafter, alignment direction) determined by the direction of deposition of the material. Liquid crystal molecules between the alignment film 73 and an additional alignment film 79 are oriented in the alignment direction of the alignment films 79. The alignment film may possibly be a so-called polyimide film, the film of a high weight molecular polymer with polyimide bonds. However, when compared to this kind of organic alignment film, the oblique deposition inorganic film is more durable, and ensures more stable operation of each component for a long time. It is therefore preferred to use the oblique deposition inorganic film as the alignment film of the VAN-LCD.

The reflecting substrate 68 includes a semiconductor substrate 74 of silicon or the like, a pixel driver circuit 76 on the semiconductor substrate 74, the reflecting electrode 77 and the alignment film 79. These elements are arranged in the order of the pixel driver circuit 76, the reflecting electrode 77 and the alignment film 79 on the semiconductor substrate 74. The reflecting substrate 68 reflects the light incident on the liquid crystal layer 69 from the polarization beam splitter 48, and sends the light back to the polarization beam splitter 48.

The reflecting electrode 77 is made of such shinny metal as silver or aluminum, and provided on the semiconductor substrate 74. The reflecting electrode 77 reflects the incident light from the polarization beam splitter 48 to send the light back to the polarization beam splitter 48. The reflecting electrode 77 is provided for each pixel of the liquid crystal display device 51, and the voltage applied across it and the transparent electrode 72 is controlled on a pixel-by-pixel basis.

The pixel driver circuit 76 is an integrated circuit made, for example, directly on the semiconductor substrate 74 by a sort of surface treatment process. The reflecting electrodes 77 are located on each pixel driver circuit 76. Each pixel driver circuit 76 is connected to the reflecting electrode 77 immediately above, and controls the voltage applied to the reflecting electrode 77.

The alignment film 79 is the same oblique deposition inorganic film as the alignment film 73, and covers over the reflecting electrode 77. The alignment film 79 is arranged so that the alignment direction thereof agrees with that of the alignment film 73.

The liquid crystal layer 69 is a thickness of the liquid crystal molecules 75 between the transparent substrate 67 and the reflecting substrate 68. These liquid crystal molecules 75 are, for example, a rod-like liquid crystal molecule with negative dielectric anisotropy. These liquid crystal molecules 75 turn in the alignment direction of the alignment films 73, 79 according to the voltage across the transparent substrate 67 and the reflecting substrate 68.

When no voltage is applied across the transparent substrate 67 and the reflecting substrate 68 (hereinafter, voltage-off state), on the other hand, the alignment films 73, 79 work to orient the liquid crystal molecules 75 substantially vertical to the surface of the liquid crystal display device 51. In this state, the liquid crystal molecules 75 have no effect on the polarization of the light passing through the liquid crystal layer 69. Namely, in the voltage-off state, the light passing through the liquid crystal layer 69 remains in the S polarization, and reflects off the reflecting electrode 77 and then enters the polarization beam splitter 48.

For example, in FIG. 3A where the liquid crystal layer 69 is in the voltage-off state and the liquid crystal molecules have little effect on the light passing through them, S polarized incident light 70 arrives at the reflecting electrode 77 without changing the polarization, reflects off to pass through the liquid crystal layer 69 again, and comes as S polarized red information light 81 into the polarization beam splitter 48. Since it is S polarized light, this red information light 81 is reflected by the polarization split film 64 of the polarization beam splitter 48, and does not arrive at the dichroic prism 61. Accordingly, the liquid crystal display device 51 appears black (hereinafter, dark state) when the pixels are put in the voltage-off state.

On the other hand, when a voltage is applied across the transparent electrodes 72 and the reflecting electrode 77, the liquid crystal molecules 75 are tilted in the alignment direction of the alignment films 73, 79. In this state, the polarization direction of the light passing through the liquid crystal layer 69 is changed according to the tilt angle of the liquid crystal molecules 75. In other words, when through the voltage-on liquid crystal layer 69, at least a part of the light changes from the S polarization into the P polarized light, and enters the polarization beam splitter 48.

For example, in FIG. 3B where a voltage is applied across the liquid crystal layer 69, most of the liquid crystal molecules 75 are tilted in the alignment direction of the alignment films 73, 79. In this state, the light passing through the liquid crystal layer 67 becomes information light 82 containing both the S polarized light components, like the incident light 70, and the P polarized light components which are not contained in the incident light 70, and then enters the polarization beam splitter 48. The information light 82 is so-called elliptically-polarized light, and the S polarized light components thereof are reflected by the polarization split film 64 while the P polarized light components thereof are transmitted through the polarization split film 64 to the dichroic prism 61. Accordingly, when a voltage is adjusted for each pixel, the amount of the P polarized light components passing through the polarization split film 64 is adjusted and the liquid crystal display device 51 appears gray.

Further, in FIG. 3C where a sufficient amount of voltage is applied across the liquid crystal layer 69, most of the liquid crystal molecules 75 are tilted in the alignment direction of the alignment films 73, 79 so greatly to be substantially parallel to the surface of the liquid crystal display device 51. In this state, the light passing through the liquid crystal layer 69 changes the polarization state, because of the birefringence of the liquid crystal molecules 75 substantially parallel to the surface, into information light 83 containing almost only the P polarized light components, and enters the polarization beam splitter 48. This information light 83 is able to pass through the polarization split film 64 of the polarization beam splitter 48. Accordingly, the liquid crystal display device 51 appears brightest, or red (hereinafter, bright state) when a sufficient amount of voltage is applied to the pixels.

The retardation compensation element 56 is disposed between liquid crystal layer 67 and the analyzer 68, so that it can compensate the phase difference of the information light coming from the liquid crystal layer 69 to the polarization beam splitter 48. The retardation compensation element 56 is composed of a negative C-plate 85 and an O-plate 86.

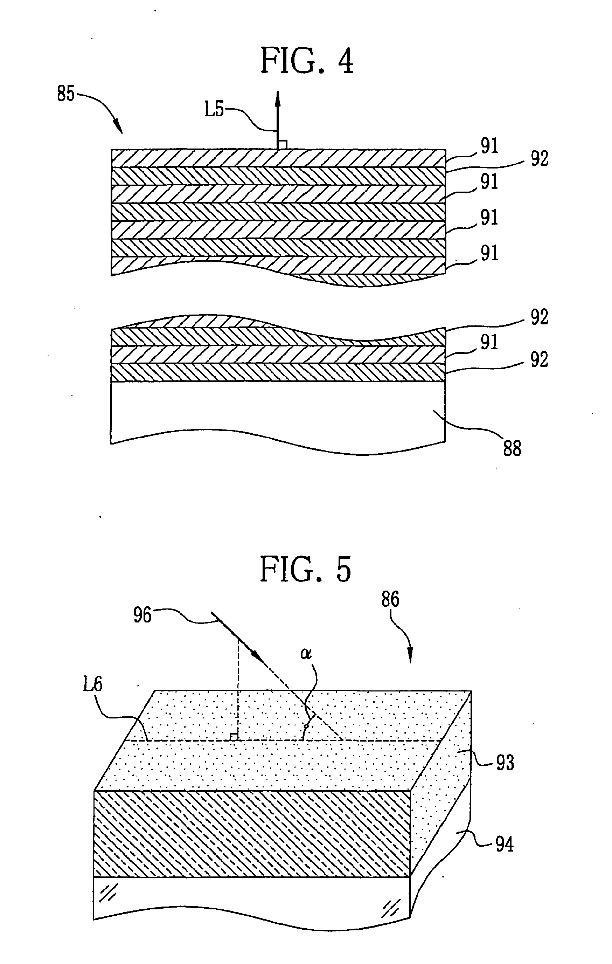

As shown in FIG. 4, the C-plate 85 (uniaxial birefringent medium) has an optical axis L5 perpendicular to the surface of the retardation compensation element 56, and compensates the phase difference of the light passing obliquely through the liquid crystal layer 69. The C-plate 85 is an alternating stack of high refractive index layers 91 and low refractive index layers 92 on a base material, such as the glass substrate 88.

In this preferred embodiment, the high refractive index layer 91 is made of TiO₂ which is a high refractive index dielectric material, and the low refractive index layer 92 is made of SiO₂ which is a low refractive index dielectric material. To prevent the reflection and interference of light between the layers, each refractive index layer of the C-plate 85 would preferably be thin enough. However, reducing the thickness of each layer will end up increasing the number of the layers to ensure proper function of the C-plate 85, and will lower the manufacturability and the productivity.

It is therefore preferred to control the optical thickness ,i.e., the mathematical product of physical thickness and the refractive index, of each refractive index layers 91, 92 to be enough smaller than the visible light wavelength λ. Specifically, a preferred optical thickness of each layer is not less than λ/100 and not greater than λ/5, and a more preferred optical thickness is not less than λ/50 and not greater than λ/10, and a still more preferred optical thickness is not less than λ/30 and not greater than λ/10.

The high refractive index layer 91 may be made of ZrO₂ or the like, and the low refractive index layer 92 may be made of MgF₂ or the like. Additionally, instead of using the glass substrate 88, the high and low refractive index layers 91, 92 may be stacked directly on the liquid crystal display device 51 or the 0-plate 86.

Since it is isotropic to the light parallel to the optical axis L5, i.e., the vertically incident light, the C-plate 85 can not compensate the phase difference of light. However, the C-plate 85 is not isotropic to the obliquely incident light, and induces birefringence. This feature enables the C-plate 85 to compensate the phase difference of the obliquely incident light and thus the phase difference of the light passing obliquely through the liquid crystal layer 69. Also, the C-plate 85 compensates the phase difference of light caused by the O-plate 86.

As shown in FIG. 5, the O-plate 85 is a biaxial birefringent medium, and composed of, for example, an oblique deposition film 93 and a glass substrate 94. Using a so-called oblique deposition method, the oblique deposition film 93 is fabricated by depositing an inorganic material, such as Ta₂O₅, at an angle onto the glass substrate 94 or such a base material. The oblique deposition film 93 manufactured in this manner has a grove of columnar structures inclined at a certain angle φ resulted from the deposition angle α in the direction of deposition (deposition direction) 96.

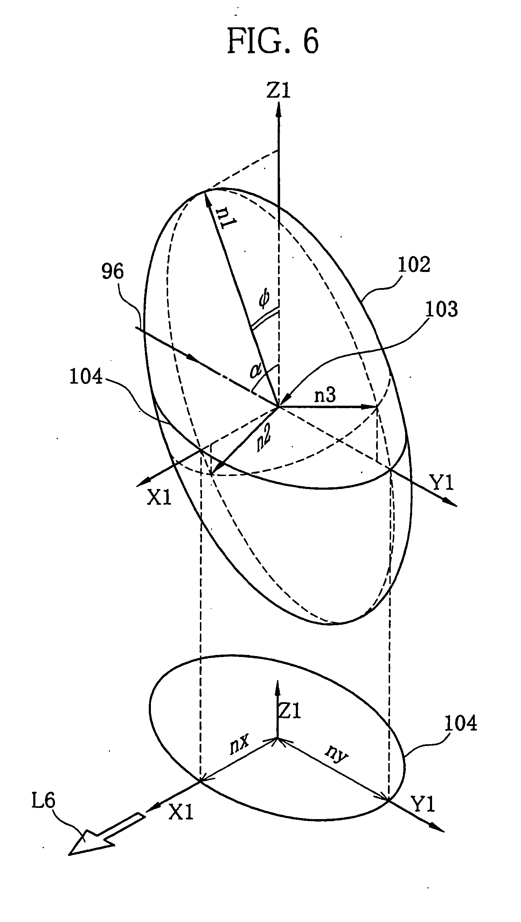

The O-plate 86 therefore generally becomes a biaxial birefringent medium. Accordingly, as shown in FIG. 6, the birefringence of the light passing through the O-plate 86 is evaluated using an index ellipsoid 102 with semi-axes of three principal refractive indices n1, n2 and n3. For example, mutually orthogonal X1 and Y1 axes are fixed on a plane parallel to the surface of the O-plate 86, and a Z1 axis is fixed along a normal line to the surface of the 0-plate 86. The deposition direction 96 is fixed on a X1-Z1 plane, and then the principle refractive index n2 resides on the X1-Z1 plane. In this condition, the largest principal refractive index of the O-plate 86, or n1, generally runs in the different direction from the deposition direction 96 although they reside on the same X1-Z1 plane, and the inclination angle φ between the principal refractive index n1 and the Z1 axis is smaller than the deposition angle α (α > φ).

When the index ellipsoid 102 is cut along a plane being parallel to the surface of the O-plate 86 and passing an origin 103, the cut surface 104 has an oval shape with a radius nx in the X1 axis direction and a radius ny in the Y1 axis direction. Accordingly, the O-plate 86 functions as a birefringent medium, having a refractive index nx in X1 axis direction and a refractive index ny in the Y1 axis direction, to the vertically incident light. Additionally, when the refractive index nx is larger than the refractive index ny (nx > ny), the smallest refractive index to the vertically incident light, i.e., a fast axis L6 runs in the Y1 axis direction. When the refractive index nx is smaller than the refractive index ny (nx < ny), to the contrary, the fast axis L6 runs in the X1 axis direction. In this manner, it is the magnitude relation between the refractive indices nx and ny, namely the relation of each principal refractive indices n1, n2 and n3 to the angle φ that determines whether the fast axis L6 of the O-plate 86 runs in the X1 axis direction or the Y1 axis direction. Therefore, while the present specification assumes the fast axis L6 to coincide with an orthographic projection of the deposition direction 96 on the 0-plate 86 (i.e., the X1 axis direction), the fast axis L6 does not necessarily run in the X1 axis direction but may run in the Y1 axis direction.

Practically, the direction of each refractive index of the 0-plate 86 will vary depending on such manufacturing conditions as degree of vacuum, temperature of substrates, material to deposit and deposition angle, and apparatus used for manufacture, and therefore the property of the O-plate can not be predicted completely. However, the O-plates of substantially the same nature can be obtained under the same manufacturing conditions and apparatus, and it is even possible to adjust the optical property of the 0-plate as desired by controlling these conditions.

Although the 0-plate 86 usually becomes a biaxial birefringent medium when fabricated by the oblique deposition method, in some cases the above mentioned controlling of the manufacturing conditions leads the 0-plate 86 to be a so-called uniaxial birefringent medium whose two principal refractive indices, for example, n2 and n3 have the same magnitude (n2=n3). This type of uniaxial birefringent medium can be considered as a particular state of the biaxial birefringent medium, and should be regarded as the uniaxial birefringent 0-plate 86.

It is to be noted that the retardation compensation elements 57, 58 have the same configuration as the retardation compensation element 56, and the liquid crystal display devices 52, 53 have the same configuration as the liquid crystal display device 51.

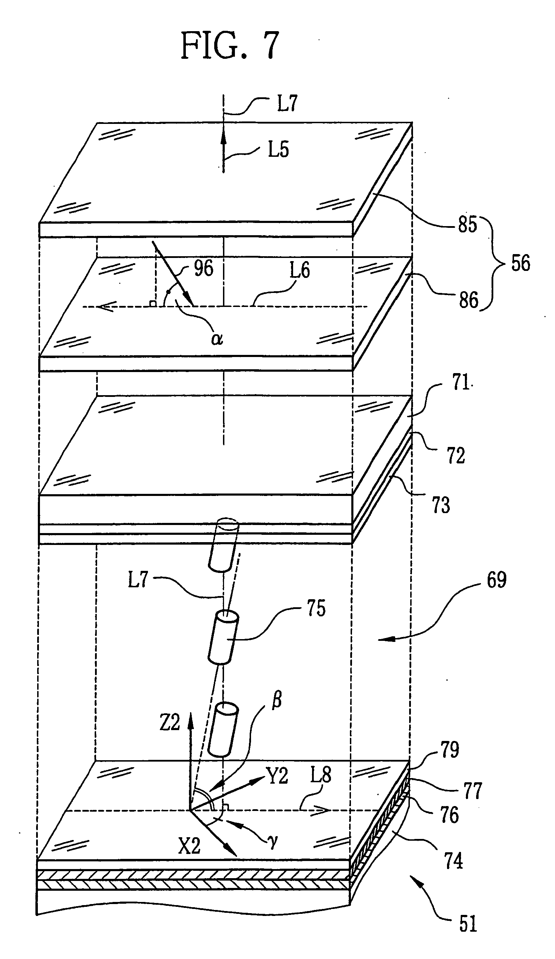

As shown in FIG. 7, the C-plate 85 and the O-plate 86 of the retardation compensation element 56 are arranged in the order of the liquid crystal display device 51, the 0-plate 86, the C-plate 85 and the polarization beam splitter 48.

As mentioned above, when no voltage is applied to the pixels of the liquid crystal display device 51, the liquid crystal molecules 75 are aligned substantially vertical to the surface of the liquid crystal display device 51. However, as shown in FIG. 6, the liquid crystal molecules 75 in the voltage-off state are in fact tilted intentionally at 5 degrees from the vertical direction so as not to induce a reverse tilt domain that causes alignment defect.

Mutually orthogonal X2 and Y2 axes are fixed on a plane parallel to the surface of the liquid crystal display device 51, and a Z2 axis is set in the vertical direction to the liquid crystal display device 51, in other words, parallel to an optical axis (transmission light axis) L7 of the light passing through the liquid crystal layer 69. Additionally, the X2 axis is oriented in the electric filed oscillation direction of the S polarized light with respect to the polarization split film 64 of the polarization beam splitter 48, and the Y2 axis is oriented in the electric filed oscillation direction of the P polarized light. In this condition, as shown in FIG. 7, there is an angle (azimuth angle) γ of 45 degree between the tilt direction of the liquid crystal molecule 75 and the X2 axis, and there is also an angle of 45 degree between the tilt direction of the liquid crystal molecule 75 and the Y2 axis.

In this condition, the liquid crystal molecule 75 forms a tilt angle β to the X2-Y2 plane. The tilt angle β shifts between 0 degree and 85 degrees according to the voltage applied to each pixel. The tilt angle β becomes approximately 0 degree and the liquid crystal molecules 75 are oriented parallel to the X2-Y2 plane when a sufficient amount of voltage is applied across the liquid crystal layer 67. In the voltage-off state, to the contrary, the tilt angle β becomes 85 degree and the liquid crystal molecules 75 are oriented substantially vertical to the X2-Y2 plane. The tilt angle β in this voltage-off state is called a pre-tilt angle, and the liquid crystal molecules 75 are tilted at 5 degrees from the Z2 axis and the transmission light axis L7 in the alignment direction of the alignment film 79.

Practically, when a voltage is applied, the liquid crystal molecules 75 near the alignment films 73, 79 maintain the same posture as in the voltage-off state, while most of the liquid crystal molecules 75 in the center of the liquid crystal layer 69 change the orientation.

In addition, if the liquid crystal molecules 75 are pre-tilted as mentioned above, the birefringence due to the pre-tilt is induces even in the dark state pixels, and a part of the light may pass through the polarization split film 64. As a result, complete black color is hardly reproduced and the contrast of a projected image is lowered.

Even when a voltage is applied across the liquid crystal layer 69, as well as in the voltage-off state, the birefringence of light is caused by the pre-tilt of the liquid crystal molecules 75 adjacent the alignment films 73, 79. In this situation, some polarized light components may pass through the polarization split film 64, and a projected image appears with low contrast.

In view of this, the O-plate 86 is arranged such that the fast axis L6 and a tilt direction L8 of the liquid crystal molecules 75 are parallel to each other. Namely, the O-plate 86 is arranged such that an orthographic projection of the deposition direction 96 of the oblique deposition film 93 onto the liquid crystal display device 51 coincides with the tilt direction L8 of the liquid crystal molecules 75.

Between the O-plate 86 thus arranged and the polarization beam splitter 48, the C-plate 85 is arranged with its optical axis L5 parallel to the Z2 axis.

When the retardation compensation element 56 is arranged in this manner, the light passing vertically through the liquid crystal layer 69 will have a phase difference because of the birefringence due to the pre-tilt of the liquid crystal molecule 75. This phase difference, however, is compensated when the light passes through the O-plate 86. Additionally, the phase difference of the light passing through the O-plate 86 is compensated by the C-plate 85. In this manner, the phase difference of the vertically incident light on the liquid crystal layer 69 is properly compensated by the 0-plate 86 and the C-plate 85, and it is therefore possible to prevent light from passing through the polarization split film 64 of the polarization beam splitter 48 during the dark state.

On the other hand, the phase difference of the light passing obliquely through the liquid crystal layer 69, or so-called skew ray is compensated by both the O-plate 86 and the C-plate 85. The C-plate 85 also compensates the phase difference of the light passing obliquely through the O-plate 86. In other words, the light passing obliquely through the liquid crystal layer 69 becomes to have a phase difference because of the birefringence due to the pre-tilt angle β of the liquid crystal molecule 75. This phase difference, however, is properly compensated by the 0-plate 86 and the C-plate 85. It is therefore possible to prevent light from passing through the polarization split film 64 during the dark state.

In this manner, the retardation compensation element 56 compensates the phase difference due to the pre-tilt of the liquid crystal molecules 75, as well as the phase difference of the light passing obliquely through the liquid crystal layer 69.

Next, with reference to Example 1, the operation of the retardation compensation element 56 is explained. Hereafter, the phase difference is substituted for retardation, the equivalent word, because the phase difference depends on the wavelength and other properties of the light passing through the liquid crystal display device and the retardation compensation element. The retardation, dΔn, is expressed by an equation of dΔn = d·(nx - ny), wherein d represents the physical thickness of the retardation compensation element, nx represents the largest principal refractive index on the element's surface, and ny represents the smallest principal refractive index on the element' s surface. Additionally, retardation Rth in the thickness direction of the liquid crystal layer and the C-plate is expressed by an equation of Rth = d·{nz - (nx + ny)/2}.

### [Example 1]

A liquid crystal display device was prepared to have retardation Rth (in the thickness direction of the liquid crystal layer) of +200nm and the liquid crystal molecules with a pre-tilt angle of 85 degrees. A retardation compensation element was then prepared from an O-plate with retardation of +4nm and an inclination angle φ of the largest principal refractive index n1 of 20.5 degrees, and a C-plate with retardation Rth in the thickness direction of -120nm. These liquid crystal display device and retardation compensation element were combined to compose a projector, and a conoscopic figure of the liquid crystal display device through a polarization beam splitter functioning as a polarizer and an analyzer was measured to evaluate the contrast of the liquid crystal display device and the projector. The conoscopic figure was measured within the ranges of -30 ≤ θ ≤ +30 and 0 ≤ φ ≤ 360 around a central point on a normal line to the liquid crystal display device, wherein φ represents an angle of rotation around the central point and θ represents an angle of measurement between the normal line intersecting at the central point.

The 0-plate in Example 1 was made by obliquely depositing Ta₂O₅ at the deposition angle α of 45 degrees, and had the largest principle refractive index n1 of 1.800, the principle refractive index n2 of 1.784, the principle refractive index n3 of 1.742 and the inclination angle φ of the principle refractive index n1 of 20.5 degrees. Consequently, the refractive index nx was smaller than the refractive index ny (nx < ny), and the fast axis L6 of the 0-plate coincided with an orthographic projection of the deposition direction onto the O-plate.

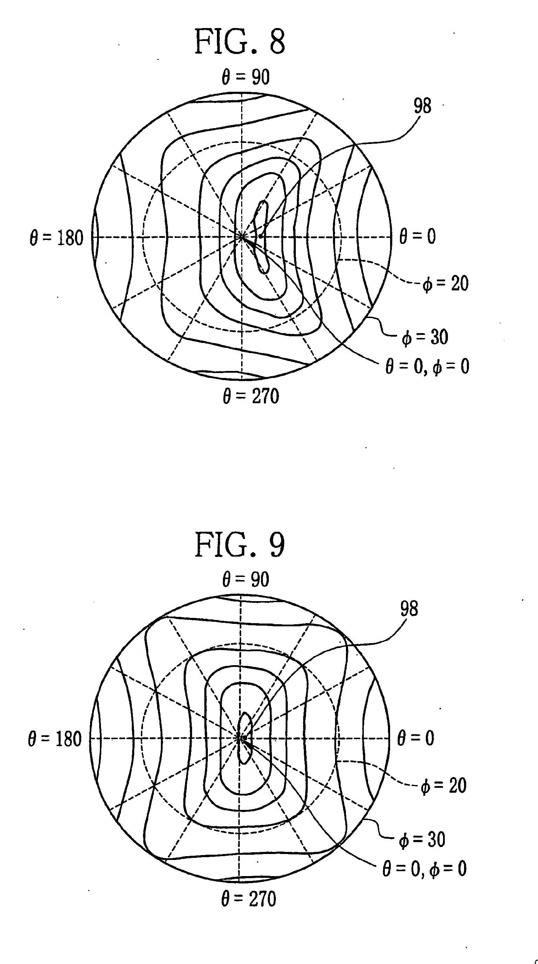

As shown in the conoscopic figure of FIG. 8 where only the C-plate was used as the retardation compensation element, a transmission light amount was lowest and the best contrast point (hereinafter, a darkest point) 98 was not on the normal line (θ = 0) to the liquid crystal display device. This resulted from the presence of the light that uncontrollably passes through the analyzer because of the birefringence, due to the pre-tilt of the liquid crystal molecules.

By comparison, as shown in the conoscopic figure of FIG. 9 where both the C-plate and the 0-plate were used as the retardation compensation element, the darkest point 98 was on the normal line (θ = 0) to the liquid crystal display device. This means that the phase difference caused by the birefringence due to the pre-tilt of the liquid crystal molecules had been compensated by the O-plate.

Next, to evaluate the effect of the retardation compensation element, a projector with a 1100:1 contrast ratio was prepared and combined with the retardation compensation element. With only the C-plate, the contrast ratio of the projector was increased to 1600:1. With retardation compensation element composed of the C-plate and the O-plate, the contrast ratio of the projector was increased to 2400:1. This result indicates that the projector, when combined with the retardation compensation element of the present invention, had improved the contrast ratio sufficiently over a wide viewing angle.

As described above, with using the retardation compensation element, the liquid crystal display device and the liquid crystal projector according to the present invention can properly compensate the phase difference due to the pre-tilt of the liquid crystal molecules of the VAN-LCD, and improves the contrast. Additionally, the retardation compensation element composed of the C-plate and the birefringent O-plate compensates the phase difference of the light passing obliquely through the VAN-LCD, and improves the viewing angle.

Furthermore, in the present invention, the use of the birefringent O-plate fabricated by the oblique deposition method allows to easily and inexpensively manufacture the retardation compensation element, which otherwise requires such cumbersome process as layering many retardation films or stretching a polymer film in several different directions, as well as expensive equipment. This retardation compensation element is also durable and long lasting.

While the above preferred embodiment utilizes the birefringence property of the O-plate, and the retardation compensation element introduced to a VAN-LCD includes a single 0-plate, the retardation compensation element may have several 0-plates.

While the VAN-LCD in the above embodiment is a single-domain type whose liquid crystal molecules are all oriented in the same alignment direction, the retardation compensation element of the present invention is applicable to a multi-domain type VAN-LCD whose pixels are grouped into domains of different alignment directions.

In the above embodiment, the C-plate is alternating stack of layers with different refractive indices. However, the C-plate may be a stretched film of triacetyl cellulose (TAC). As well as the TAC film, the C-plate may be fabricated from, for example, a polycarbonate film, a polyvinyl alcohol film, a polysulfone film, a polyolefin film and a polyarylate film.

While it is disposed between the crystal display device and the polarization beam splitter in the above embodiment, the retardation compensation element need only be disposed between the liquid crystal layer and the polarization split film. Therefore, the retardation compensation element is possibly integrated with the crystal display device or the polarization beam splitter.

It is possible to reverse the order of the O-plate and the C-plate although they are arranged in the order of the liquid crystal display device, the O-plate, the C-plate and the polarization beam splitter in the above embodiment. Additionally, the O-plate and the C-plate need not be adjacent to each other, but instead they my be located separately on the liquid crystal display device and the polarization beam splitter respectively.

In the above embodiment, the liquid crystal projector has three liquid crystal display devices for R, G and B colors. The projector, however, may have a single liquid crystal display device to switch over R, G, and B images rapidly, and a full-color projection image is produced by casting R, G and B light selectively on this liquid crystal display device.

Further, in the above embodiment, the liquid crystal display device is used in an on-axis system which sends the light to the liquid crystal display device from the vertical direction and casts information light reflected by the liquid crystal display device to the vertical direction. However, the liquid crystal display device may be used in an off-axis system which sends the light to the liquid crystal display device from, for example, an oblique direction and casts information light reflected by the liquid crystal display device to a different oblique direction from the incident direction.

While the above embodiments do not illustrate typical function adding layers, such as an anti-reflection layer and an anti-glare layer, it is preferred to use these function adding layers as usual along with the phase difference compensation layer.

## Claims

1. A reflective liquid crystal display device (51, 52, 53) having a liquid crystal display cell in which nematic liquid crystal molecules (75) are aligned substantially vertical to a cell substrate (VAN) when no voltage is applied to a liquid crystal layer (69), comprising:
a biaxial birefringent medium (86) which is made by oblique deposition of an inorganic material and has both an optical axis inclined to the substrate surface of said liquid crystal cell and a fast axis (L6) **characterized in that** the fast axis (L6) coincides with an orthographic projection of a deposition direction (96) of said inorganic material onto said cell surface, said liquid crystal molecules (75) have a tilt direction (L8) which is an orthographic projection of the director of said liquid crystal molecules (75) onto said cell surface and said biaxial birefringent medium (86) is oriented such that said fast axis (L6) is provided in parallel with the tilt direction (L8).

2. The reflective liquid crystal display device of claim 1, further comprising:
a uniaxial birefringent medium (85) combined with said biaxial birefringent medium (86) and having an optical axis perpendicular to said cell surface, said uniaxial birefringent medium (85) compensating a phase difference of light passing obliquely through the liquid crystal layer (69) and a phase difference of light passing through said biaxial birefringent medium (86).

3. The reflective liquid crystal display device of claim 2, wherein said uniaxial birefringent medium (85) is an alternate stack of high and low refractive index inorganic layers (91, 92).

4. A reflective liquid crystal projector (10) for enlarging and projecting an image displayed in a reflective liquid crystal display device (51, 52, 53) according to claim 1.

## Patentansprüche

1. Flüssigkristallanzeigeeinrichtung reflektierenden Typs (51, 52, 53) mit einer Flüssigkristallanzeigezelle, in der nematische Flüssigkristallmoleküle (75), wenn keine Spannung an eine Flüssigkristallschicht (69) angelegt ist, im Wesentlichen senkrecht zu einem Zellen-Substrat (VAN) ausgerichtet sind, aufweisend:
ein biaxial doppelbrechendes Medium (86), das durch eine schräge Abscheidung eines anorganischen Materials gebildet ist, und beides, eine zur Substratoberfläche der Flüssigkristallzelle geneigte optische Achse und eine schnelle Achse (L6) aufweist, **dadurch gekennzeichnet, dass** die schnelle Achse (L6) mit einer rechtwinkligen Projektion einer Abscheidungsrichtung (96) des anorganischen Materials auf die Zellenoberfläche zusammenfällt, wobei die Flüssigkeitsmoleküle (75) einen Verkippungsrichtung (L8) aufweisen, die eine rechtwinklige Projektion des Direktors der Flüssigkristallmoleküle (75) auf die Zellenoberfläche ist, und das biaxial doppelbrechende Medium (86) derart orientiert ist, dass die schnelle Achse (L6) parallel zur Verkippungsrichtung (L8) vorgesehen ist.

2. Flüssigkristallanzeigeeinrichtung reflektierenden Typs nach Anspruch 1, ferner aufweisend:
ein uniaxial doppelbrechendes Medium (85), das mit dem biaxial doppelbrechenden Medium (86) kombiniert ist und eine optische Achse aufweist, die rechtwinklig zur Zellenoberfläche ist, wobei das uniaxial doppelbrechende Medium (85) eine Phasendifferenz von schräg durch die Flüssigkristallschicht (69) laufendem Licht und eine Phasendifferenz von durch das biaxial doppelbrechende Medium (86) laufendem Licht kompensiert.

3. Flüssigkristallanzeigeeinrichtung reflektierenden Typs nach Anspruch 2, wobei das uniaxial doppelbrechende Medium (85) ein alternierender Stapel von anorganischen Schichten (91, 92) mit hohem und geringem Brechungsindex ist

4. Flüssigkristallprojektor reflektierenden Typs (10) zum Vergrößern und Projizieren eines in einer Flüssigkristallanzeigeeinrichtung reflektierenden Typs (51, 52, 53) nach Anspruch 1 dargestellten Bildes.

## Revendications

1. Dispositif d'affichage réfléchissant à cristaux liquides (51, 52, 53) ayant une cellule d'affichage à cristaux liquides dans laquelle des molécules de cristaux liquides nématiques (75) sont alignées sensiblement verticalement par rapport un substrat de cellule (VAN) lorsqu'aucune tension n'est appliquée à une couche de cristaux liquides (69), comprenant :
un milieu biréfringent biaxial (86) qui est fait par dépôt oblique d'un matériau inorganique et qui possède à la fois un axe optique incliné par rapport à la surface de substrat de ladite cellule à cristaux liquides et un axe rapide (L6) **caractérisé en ce que** l'axe rapide (L6) coïncide avec une projection orthographique d'une direction de dépôt (96) du dit matériau inorganique sur ladite surface de cellule, lesdites molécules de cristaux liquides (75) ont une direction d'inclinaison (L8) qui est une projection orthographique du directeur desdites molécules de cristaux liquides (75) sur ladite surface de cellule et ledit milieu biréfringent biaxial (86) est orienté de telle sorte que ledit axe rapide (L6) est disposé en parallèle avec la direction d'inclinaison (L8).

2. Le dispositif d'affichage réfléchissant à cristaux liquides de la revendication 1, comprenant en outre:
un milieu biréfringent uniaxial (85) combiné avec ledit milieu biréfringent biaxial (86) et ayant un axe optique perpendiculaire à ladite surface de cellule, ledit milieu biréfringent uniaxial (85) compensant une différence de phase de la lumière qui passe obliquement à travers la couche de cristaux liquides (69) et une différence de phase de la lumière passant à travers ledit milieu biréfringent biaxial (86).

3. Le dispositif d'affichage réfléchissant à cristaux liquides de la revendication 2, dans lequel ledit milieu biréfringent uniaxial (85) est un empilement alterné de couches inorganiques à indice de réfraction élevé et bas (91, 92).

4. Un projecteur réfléchissant à cristaux liquides (10) pour agrandir et projeter une image affichée dans un dispositif d'affichage réléchissant à cristaux liquides (51, 52, 53) selon la revendication 1.
